# EUROPÄISCHE PATENTSCHRIFT

(11) **EP 3 589 384 B1**
(45) Veröffentlichungstag und Bekanntmachung des Hinweises auf die Patenterteilung: **15.06.2022**
(21) Anmeldenummer: 18712801.2
(22) Anmeldetag: 28.02.2018
(51) Int. Cl.: B01D 45/18, B01D 19/00, F04B 39/02, F04C 29/02

(54) **VORRICHTUNG UND VERFAHREN ZUM ABSCHEIDEN VON SCHMIERMITTEL AUS EINEM GASSTROM SOWIE ANLAGE UND VERFAHREN ZUM VERDICHTEN VON BRENNBAREN GASEN**
DEVICE AND METHOD FOR SEPARATING LUBRICANT FROM A GAS STREAM, AND INSTALLATION AND METHOD FOR COMPRESSING COMBUSTIBLE GASES
DISPOSITIF ET PROCÉDÉ DE SÉPARATION DE LUBRIFIANT D'UN FLUX DE GAZ ET INSTALLATION ET PROCÉDÉ DE COMPRESSION DE GAZ COMBUSTIBLES

(30) Priorität: 28.02.2017 EP 17158558
(43) Veröffentlichungstag der Anmeldung: 08.01.2020
(73) Patentinhaber: Burckhardt Compression AG, 8404 Winterthur (CH)
(72) Erfinder: LIEBRICH, Thomas, 9470 Buchs (CH); HESS, Thomas, 8404 Winterthur (CH)
(74) Vertreter: Hepp Wenger Ryffel AG
(86) Internationale Anmeldenummer: PCT/EP2018/054981
(87) Internationale Veröffentlichungsnummer: WO 2018/158345

(56) Entgegenhaltungen:
- WO-A1-2016/130156
- JP-A- H1 026 093
- JP-A- S62 258 198
- US-A- 3 977 972

## Beschreibung

Die Erfindung betrifft eine Vorrichtung sowie ein Verfahren zum Abscheiden von Schmiermittel aus einem Gasstrom. Die Erfindung betrifft weiter eine Anlage sowie ein Verfahren zum Verdichten von brennbaren Prozessgasen.

### Stand der Technik

Es ist bekannt brennbare Prozessgase wie Erdgas, Methan, Ethan oder allgemein Kohlenwasserstoffe oder Kohlenwasserstoffgemische mit Hilfe eines Kolbenverdichters von einem Anfangsdruck auf einen Enddruck zu verdichten. Ein Komprimieren solcher brennbarer Gase ist jedoch äusserst anspruchsvoll, insbesondere wenn diese auf einen hohen Druck von beispielsweise über 250 bar komprimiert werden. Beim Komprimieren solcher brennbarer Gase sind technische Massnahmen erforderlich um einen Brand oder gar eine Explosion zu verhindern. Das Dokument JP10026093A offenbart eine Vorrichtung zum Entfernen von Öl aus einem komprimierten Prozessgas. Diese Vorrichtung weist den Nachteil auf, dass nicht ausgeschlossen ist, dass das komprimierte, brennbare Prozessgas einen Brand verursachen könnte.

### Darstellung der Erfindung

Aufgabe der Erfindung ist es eine Vorrichtung sowie ein Verfahren zu bilden, die eine sichere Handhabung von brennbaren Prozessgasen erlauben.

Diese Aufgabe wird gelöst mit einer Vorrichtung umfassend die Merkmale von Anspruch 1. Die abhängigen Ansprüche 2 bis 5 betreffen weitere vorteilhafte Ausgestaltungen. Die Aufgabe wird zudem gelöst mit einer Anlage umfassend die Merkmale von Anspruch 6. Die Aufgabe wird weiter gelöst mit einem Verfahren umfassend die Merkmale von Anspruch 7. Die abhängigen Ansprüche 8 bis 13 betreffen weitere vorteilhafte Verfahrensschritte.

Die Aufgabe wird insbesondere gelöst mit einer Vorrichtung zum Abscheiden eines Schmiermittels aus einem komprimierten Gasstrom enthaltend ein brennbares Prozessgas und das Schmiermittel, umfassend eine erste Filtervorrichtung, welcher der komprimierte Gasstrom zugeleitet ist, und von welcher ein schmiermittelreduzierter Gasstrom abgeleitet ist, wobei die erste Filtervorrichtung einen Abscheider zum Abscheiden von Schmiermittel sowie einen ersten Speicherbehälter zum Speichern eines abgeschiedenen Schmiermittels umfasst, wobei das abgeschiedene Schmiermittel eine Restmenge von Prozessgas enthält, sowie umfassend einen ersten Zwischentank der über eine erste Verbindungsleitung mit dem ersten Speicherbehälter verbunden ist, umfassend eine Spülgaszuleitung die dem ersten Zwischentank ein Spülgas zuführt, umfassend eine Spülgasableitung die aus dem ersten Zwischentank Spülgas sowie darin enthaltenes, ausgegastes Prozessgas abführt, und umfassend einen Sammeltank der über eine erste Abflussleitung mit dem ersten Zwischentank verbunden ist, um das abgeschiedene Schmiermittel dem Sammeltank zuzuführen. Als Schmiermittel wird vorzugsweise ein flüssiges Schmiermittel wie zum Beispiel Öl verwendet.

Die erfindungsgemässe Vorrichtung umfasst ferner eine zweite Filtervorrichtung, welcher der schmiermittelreduzierte Gasstrom zugeleitet ist, und von welcher ein gereinigter Gasstrom abgeleitet ist. Die zweite Filtervorrichtung umfasst einen Abscheider zum Abscheiden von Schmiermittel sowie einen zweiten Speicherbehälter zum Speichern des abgeschiedenen Schmiermittels, wobei das abgeschiedene Schmiermittel eine Restmenge von Prozessgas enthält. Es ist ein zweiter Zwischentank angeordnet, der über eine zweite Verbindungsleitung mit dem zweiten Speicherbehälter verbunden ist. Eine Spülgaszuleitung führt dem zweiten Zwischentank ein Spülgas zu und eine Spülgasableitung führt aus dem zweiten Zwischentank Spülgas sowie darin enthaltenes, ausgegastes Prozessgas ab. Der Sammeltank ist über eine zweite Abflussleitung mit dem zweiten Zwischentank verbunden, um das abgeschiedene Schmiermittel dem Sammeltank zuzuführen. Bezüglich jedem Zwischentank ist je ein Ventilpaar angeordnet, wobei jedes Ventilpaar aus einem dem Zwischentank vorgelagerten und einem dem Zwischentank nachgelagerten Ventil besteht. Die Vorrichtung umfasst zudem eine Ansteuervorrichtung zur Ansteuerung der Ventile, wobei die Ventile derart angesteuert sind, dass im betriebsgemässen Einsatz bei jedem Ventilpaar zumindest eines der Ventile geschlossen ist, um eine durchgehende, Fluid leitende Verbindung zwischen der ersten bzw. zweiten Filtervorrichtung und dem Sammeltank auszuschliessen. Eine Mehrzahl von Füllstandsüberwachungsvorrichtungen zum Überwachen des Füllstandes des abgeschiedenen Schmiermittels sind im ersten und zweiten Speicherbehälter, im ersten und zweiten Zwischentank sowie im Sammeltank angeordnet, wobei die Ansteuervorrichtung die Ventile in Abhängigkeit der Füllstandsüberwachungsvorrichtungen derart ansteuert, dass der erste und zweite Speicherbehälter, der erste und zweite Zwischentank sowie der Sammeltank im betriebsgemässen Einsatz nie vollständig entleert ist.

Die Aufgabe wird weiter insbesondere gelöst mit einem Verfahren zum Abscheiden eines Schmiermittels aus einem komprimierten Gasstrom, wobei der Gasstrom ein brennbares Prozessgas sowie das Schmiermittel umfasst, wobei das Schmiermittel mit einer ersten Filtervorrichtung zumindest teilweise aus dem komprimierten Gasstrom abgeschieden wird und als ein abgeschiedenes Schmiermittel enthaltend eine Restmenge von Prozessgas einem ersten Speicherbehälter zugeführt wird, wobei der komprimierte Gasstrom die erste Filtervorrichtung als schmiermittelreduzierter Gasstrom verlässt, wobei das sich im ersten Speicherbehälter befindliche, abgeschiedene Schmiermittel einem ersten Zwischentank zugeführt wird, wobei das sich im abgeschiedenen Schmiermittel befindliche Prozessgas im ersten Zwischentank ausgegast wird, wobei der ersten Zwischentank von einem Spülgas durchström wird und dabei ausgegastes Prozessgas durch das Spülgas aus dem ersten Zwischentank abgeführt wird, und wobei das abgeschiedene Schmiermittel aus dem ersten Zwischentank einem Sammeltank zugeführt wird, sodass das abgeschiedene Schmiermittel im Sammeltank kein Prozessgas oder eine vernachlässigbar geringe Menge Prozessgas enthält. Der schmiermittelreduzierte Gasstrom wird einer zweiten Filtervorrichtung zugeführt, wobei mit der zweiten Filtervorrichtung Schmiermittel aus dem schmiermittelreduzierten Gasstrom abgeschieden wird und als ein abgeschiedenes Schmiermittel enthaltend eine Restmenge von Prozessgas einem zweiten Speicherbehälter zugeführt wird. Der schmiermittelreduzierte Gasstrom verlässt die zweite Filtervorrichtung als gereinigter Gasstrom. Das sich im zweiten Speicherbehälter befindliche, abgeschiedene Schmiermittel wird einem zweiten Zwischentank zugeführt, wobei das sich im abgeschiedenen Schmiermittel befindliche Prozessgas im zweiten Zwischentank ausgegast wird. Der zweite Zwischentank wird ebenfalls vom Spülgas durchströmt und dabei ausgegastes Prozessgas wird durch das Spülgas aus dem zweiten Zwischentank abgeführt. Das abgeschiedene Schmiermittel aus dem zweiten Zwischentank wird dem Sammeltank zugeführt. Jedem Zwischentank sind paarweise ein vorgelagertes und ein nachgelagertes Ventil zugeordnet, wobei das abgeschiedene Schmiermittel durch Öffnen und Schliessen des dem Zwischentank vorgelagerten Ventils vom Speicherbehälter zum Zwischentank gefördert wird und wobei das abgeschiedene Schmiermittel durch Öffnen und Schliessen des dem Zwischentank nachgelagerten Ventils vom Zwischentank zum Sammeltank gefördert wird. Die Ventile werden dabei derart angesteuert, dass bei jedem Zwischentank dessen vorgelagertes und nachgelagertes Ventil nicht gleichzeitig geöffnet sind. Ein Füllstand des abgeschiedenen Schmiermittels wird im ersten Speicherbehälter, im zweiten Speicherbehälter, im ersten Zwischentank, und auch im zweiten Zwischentank gemessen. Die Ventile werden dabei derart angesteuert, dass zumindest der erste und zweite Speicherbehälter nie vollständig entleert werden, und dass auch der erste und der zweite Zwischentank nie vollständig entleert werden.

Um ein brennbares Gas wie zum Beispiel Erdgas, Methan oder Ethan auf einen hohen Enddruck zu verdichten, beispielsweise auf zumindest 80 bar oder noch höher auf zumindest 250 bar, hat es sich als vorteilhaft erwiesen dem Zylinder des Kolbenverdichters ein Schmiermittel zuzuführen, vorzugsweise indem ein Schmiermittel in den Zylinder des Kolbenverdichters injiziert wird, sodass der Kolben beziehungsweise die Dichtungsringe des Kolbens zumindest teilweise geschmiert im Zylinder bewegt werden. Eine solche Schmierung weist den Vorteil auf, dass die Dichtungsringe einen geringen Verschleiss beziehungsweise eine erhöhte Haltbarkeit aufweisen, sodass der Kolbenverdichter zuverlässiger, wartungsarmer und somit günstiger betrieben werden kann. Ein derart verdichtetes beziehungsweise komprimiertes brennbares Gas weist jedoch den Nachteil auf, dass dieses Schmiermittel enthält, was an sich unerwünscht ist, da es die Reinheit bzw. Qualität des Prozessgases beeinträchtigt. Es ist daher erforderlich das Schmiermittel nachträglich aus dem komprimierten Gas abzuscheiden um ein schmiermittelarmes oder ein schmiermittelfreies komprimiertes, brennbares Prozessgas zu erlangen. Die erfindungsgemässe Vorrichtung beziehungsweise das erfindungsgemässe Verfahren weisen den Vorteil auf, dass sich das Schmiermittel zuverlässig aus dem komprimierten Gas abscheiden lässt, und dass das abgeschiedene Schmiermittel kein brennbares Prozessgas enthält, das ausgasen könnte, und das im schlimmsten Falle einen Brand oder eine Explosion verursachen könnten.

Die erfindungsgemässe Vorrichtung beziehungsweise das erfindungsgemässe Verfahren ermöglichen daher ein kostengünstiges, zuverlässiges und sicheres Abscheiden von Schmiermitteln aus einem brennbaren Gasstrom. Die erfindungsgemässe Vorrichtung beziehungsweise das erfindungsgemässe Verfahren ermöglichen zudem das abgeschiedene Schmiermittel in eine explosionssichere Zone überzuführen, sodass keinerlei Explosionsgefahr besteht.

Die erfindungsgemässe Vorrichtung umfasst eine erste Filtervorrichtung, welcher das komprimierte Gas enthaltend Schmiermittel zugeleitet ist, wobei die erste Filtervorrichtung einen Abscheider zum Abscheiden von Schmiermittel sowie einen ersten Speicherbehälter zum Speichern des abgeschiedenen Schmiermittels umfasst. Das abgeschiedene Schmiermittel enthält eine Restmenge von Prozessgas. Ein erster Zwischentank ist mit dem ersten Speicherbehälter verbunden, sodass das abgeschiedene Schmiermittel im Zwischentank zwischengespeichert wird. Der Zwischentank wird von einem Spülgas, beispielsweise Stickstoff, durchströmt, sodass aus dem abgeschiedenen Schmiermittel ausgegastes Prozessgas aus dem Zwischentank abführt wird, und beispielsweise abgefackelt wird. Nach einer gewissen Verweilzeit, beispielsweise nach einer Verweilzeit im Bereich von Stunden bis Tagen, wird der Inhalt des Zwischentanks in einen Sammeltank entleert, wobei das sich im Sammeltank befindliche abgeschiedene Schmiermittel frei und weitgehend frei von Prozessgas ist. Die Entgasung erfolgt vorzugsweise ausschliesslich im Zwischentank.

. Die erfindungsgemässe Vorrichtung umfasst ferner eine zweite Filtervorrichtung, welcher der schmiermittelreduzierte Gasstrom zugeleitet ist, und von welcher ein gereinigter Gasstrom abgeleitet ist. Die zweite Filtervorrichtung umfasst einen Abscheider zum Abscheiden von Schmiermittel sowie einen zweiten Speicherbehälter zum Speichern des abgeschiedenen Schmiermittels, wobei das abgeschiedene Schmiermittel eine Restmenge von Prozessgas enthält. Es ist ein zweiter Zwischentank angeordnet, der über eine zweite Verbindungsleitung mit dem zweiten Speicherbehälter verbunden ist. Eine Spülgaszuleitung führt dem zweiten Zwischentank ein Spülgas zu und eine Spülgasableitung führt aus dem zweiten Zwischentank Spülgas sowie darin enthaltenes, ausgegastes Prozessgas ab. Der Sammeltank ist über eine zweite Abflussleitung mit dem zweiten Zwischentank verbunden, um das abgeschiedene Schmiermittel dem Sammeltank zuzuführen. Bezüglich jedem Zwischentank ist je ein Ventilpaar angeordnet, wobei jedes Ventilpaar aus einem dem Zwischentank vorgelagerten und einem dem Zwischentank nachgelagerten Ventil besteht. Die Vorrichtung umfasst zudem eine Ansteuervorrichtung zur Ansteuerung der Ventile, wobei die Ventile derart angesteuert sind, dass im betriebsgemässen Einsatz bei jedem Ventilpaar zumindest eines der Ventile geschlossen ist, um eine durchgehende, Fluid leitende Verbindung zwischen der ersten bzw. zweiten Filtervorrichtung und dem Sammeltank auszuschliessen. Eine Mehrzahl von Füllstandsüberwachungsvorrichtungen zum Überwachen des Füllstandes des abgeschiedenen Schmiermittels sind im ersten und zweiten Speicherbehälter, im ersten und zweiten Zwischentank sowie im Sammeltank angeordnet, wobei die Ansteuervorrichtung die Ventile in Abhängigkeit der Füllstandsüberwachungsvorrichtungen derart ansteuert, dass der erste und zweite Speicherbehälter, der erste und zweite Zwischentank sowie der Sammeltank im betriebsgemässen Einsatz nie vollständig entleert ist.

In einer vorteilhaften Ausgestaltung umfasst die Vorrichtung zumindest zwei und vorzugsweise drei in Serie geschaltete Filtervorrichtungen, vorzugsweise Ölabscheider, durch welche das komprimierte Gas fliest. Vorteilhafterweise werden nacheinander folgend unterschiedliche Ölabscheider verwendet. Vorteilhafterweise werden Zyklon-Ölabscheider, und/oder Demister-Ölabscheider und/oder Koaleszenzfilter-Ölabscheider verwendet. In einer vorteilhaften Anordnung umfasst die Vorrichtung drei in Serie geschaltete Filtervorrichtungen, einen Zyklon-Ölabscheider und nachfolgend zwei in Serie geschaltete Koaleszenzfilter-Ölabscheider.

Jeder Ölabscheider umfasst einen eigenen Speicherbehälter, und jeder Speicherbehälter ist über einen separaten Zwischentank mit dem Sammeltank verbunden. Diese Ausgestaltung weist den Vorteil auf, dass die Ölabscheidung unabhängig vom Gasdruck in den einzelnen Ölabscheidern bzw. den einzelnen Filterstufen abläuft, weil diese getrennt zum Sammeltank geführt werden.

Vor und nach dem Zwischentank ist je ein Ventil angeordnet, sodass die Verbindung zwischen vorgeschaltetem Speicherbehälter und dem Zwischentank und/oder die Verbindung zwischen dem Zwischentank und dem Sammeltank ansteuerbar unterbrochen werden kann. Die Ventile werden derart geschaltet, dass nie eine offene, Fluid leitende Verbindung zwischen dem Speicherbehälter eines Abscheiders und dem Sammeltank entsteht. Dadurch ist sichergestellt, dass der komprimierte Gasstrom, welcher üblicherweise einen sehr hohen Druck aufweist, nicht direkt in den Sammeltank gelangen kann. Zudem ist sichergestellt, dass im Speicherbehälter eines Abscheiders befindliches, abgeschiedenes Schmiermittel nicht direkt vom Speicherbehälter des Abscheiders in den Sammeltank gelangen kann. Somit ist sichergestellt, dass im Sammeltank kein unkontrolliertes Ausgasen von Prozessgas aus dem abgeschiedenen Speichermittel stattfindet. Die Ventile sind zudem vorzugsweise derart zu schalten, dass sichergestellt ist, dass das abgeschiedene Schmiermittel eine gewisse, vorbestimmte Zeitdauer im Zwischentank verbleibt, um ein Ausgasen, vorzugsweise ein möglichst vollständiges Ausgasen des Prozessgases aus dem abgeschiedenen Schmiermittel im Zwischentank, zu gewährleisten.

Erfindungsgemäss wird zudem der Flüssigkeitspegel zumindest im ersten und im zweiten Speicherbehälter und im ersten und im zweiten Zwischentank und vorzugsweise auch im Sammeltank gemessen. Die Ventile werden derart angesteuert, dass eine Restmenge im entsprechenden Behälter verbleibt, beispielsweise 25% des entsprechenden Behältervolumens. Diese Verfahren verhindert ebenfalls, dass sich der komprimierte Gasstrom vom Speicherbehälter des Abscheiders über den Zwischentank bis zum Sammeltank ausbreiten kann.

In einer besonders vorteilhaften Ausgestaltung ist der Speicherbehälter in einer explosionsgefährdeten Zone angeordnet, und ist dieser über eine Fluidleitung mit einem Schmiermitteltank verbunden, der in einer explosionssicheren Zone angeordnet ist. Dadurch ist sichergestellt, dass das abgeschiedene Schmiermittel, welches letztendlich in den Schmiermitteltank fliest, frei von brennbarem Prozessgas ist. Zudem werden die Sicherheit einer Anlage erhöht und die Kosten einer Anlage reduziert, wenn der Schmiermitteltank in der explosionssicheren Zone angeordnet werden kann.

Die Erfindung wird nachfolgend an Hand von Ausführungsbeispielen beschrieben.

### Kurze Beschreibung der Zeichnungen

Die zur Erläuterung der Ausführungsbeispiele verwendeten Zeichnungen zeigen:
- Fig. 1: eine schematische Darstellung einer Vorrichtung zum Abscheiden von Schmiermittel aus einem Gasstrom;
- Fig. 2: ein weiteres Ausführungsbeispiel einer Vorrichtung zum Abscheiden von Schmiermittel aus einem Gasstrom;
- Fig. 3: ein weiteres Ausführungsbeispiel einer Vorrichtung zum Abscheiden von Schmiermittel aus einem Gasstrom.

Grundsätzlich sind in den Zeichnungen gleiche Teile mit gleichen Bezugszeichen versehen.

### Wege zur Ausführung der Erfindung

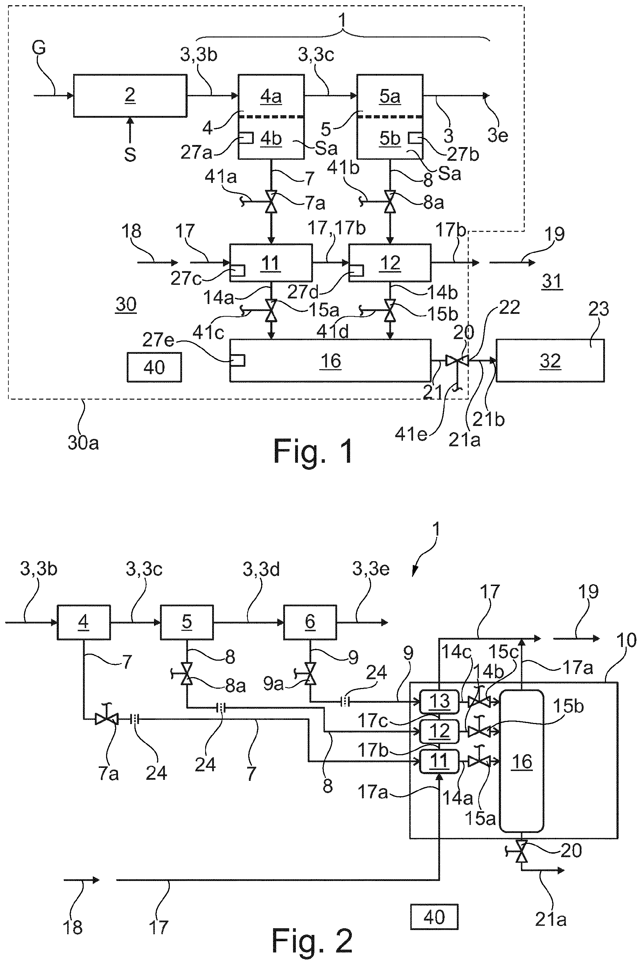

Fig. 1 zeigt schematisch eine Vorrichtung 1 zum Abscheiden von Schmiermittel. Der Vorrichtung 1 ist ein Kompressor 2, vorzugsweise ein Kolbenkompressor, vorgeschaltet, dem ein zu verdichtendes, brennbares Prozessgas G, vorzugsweise Erdgas, Methan oder Ethan zugeführt ist. Das Prozessgas G wird im Kompressor 2 auf einen hohen Gasdruck von beispielsweise über 80 bar, oder über 250 bar, und vorzugsweise auf über 300 bar verdichtet. Um bei diesem hohen Druck die Haltbarkeit des Kompressors, insbesondere die Haltbarkeit von Dichtungsringen des Kolbens zu erhöhen, wird ein Schmiermittel S verwendet, das dem Kompressor zugeführt wird. Vorteilhafterweise wird als Schmiermittel S ein Schmieröl in den Verdichtungsraum des Kompressors 2 eingespritzt, sodass am Ausgang des Kompressors 2 ein komprimierter Gasstrom 3b anliegt, enthaltend das brennbare Prozessgas G und das Schmiermittel S, welcher der Vorrichtung 1 zugeführt wird.

Die erfindungsgemässe Vorrichtung 1 zum Abscheiden des Schmiermittels S aus einem komprimierten Gasstrom 3b umfasst zumindest eine erste Filtervorrichtung 4, welcher der komprimierte Gasstrom 3b zugeleitet ist, und von welcher ein schmiermittelreduzierter Gasstrom 3c abgeleitet ist. Die erste Filtervorrichtung 4 umfasst einen Abscheider 4a zum Abscheiden von Schmiermittel S sowie einen ersten Speicherbehälter 4b zum Speichern eines abgeschiedenen Schmiermittels Sa, wobei das abgeschiedene Schmiermittel Sa eine Restmenge von Prozessgas G enthält. Die Vorrichtung 1 umfasst zudem einen ersten Zwischentank 11, der über eine erste Verbindungsleitung 7 mit dem ersten Speicherbehälter 4b verbunden ist. Zudem ist dem ersten Zwischentank 11 eine Spülgaszuleitung 17 enthaltend Spülgas 18, vorzugsweise Stickstoff, zuführt. Das abgeschiedene Schmiermittel Sa verbleibt eine gewisse Zeitdauer von zumindest einer Stunde, und vorzugsweise während einer Zeitdauer im Bereich von mehreren Stunden bis zehn Tagen im Zwischentank 11, sodass das sich im ausgeschiedenen Schmiermittel Sa befindliche Prozessgas G ausgasen kann. Das ausgegaste Prozessgas G wird über eine Spülgasableitung 17b abgeführt und beispielsweise in die Umwelt entlassen, vorteilhafterweise durch einen Entlüftungsanschluss19. Der Sammeltank 16 ist über eine erste Abflussleitung 14a mit dem ersten Zwischentank 11 verbunden ist, um das abgeschiedene Schmiermittel Sa dem Sammeltank 16 zuzuführen.

Die Vorrichtung 1 umfasst, wie in Figur 1 dargestellt, zudem eine zweite Filtervorrichtung 5, welcher der schmiermittelreduzierte Gasstrom 3c zugeleitet ist, und von welcher ein gereinigter Gasstrom 3e abgeleitet ist. Die zweite Filtervorrichtung 5 umfasst einen Abscheider 5a zum Abscheiden von Schmiermittel S, und umfasst einen zweiten Speicherbehälter 5b zum Speichern des abgeschiedenen Schmiermittels Sa, wobei das abgeschiedene Schmiermittel Sa eine Restmenge von Prozessgas G enthält. Ein zweiter Zwischentank 12 ist über eine zweite Verbindungsleitung 8 mit dem zweiten Speicherbehälter 5b verbunden. Auch dem zweiten Zwischentank 12 wird über eine Spülgasleitung 17 Spülgas 18 zuführt und über eine Spülgasableitung 17a wieder abgeführt, um ausgegastes Prozessgas G aus dem Zwischentank 12 zu entfernen. Der Sammeltank 16 ist über eine zweite Abflussleitung 14b mit dem zweiten Zwischentank 12 verbunden ist, um das abgeschiedene Schmiermittel Sa dem Sammeltank 16 zuzuführen.

Das Schmiermittel S wird mit der ersten Filtervorrichtung 4 zumindest teilweise aus dem komprimierten Gasstrom 3b abgeschieden und als abgeschiedenes Schmiermittel Sa enthaltend eine Restmenge von Prozessgas G dem ersten Speicherbehälter 4b zugeführt. Der zugeleitete komprimierte Gasstrom 3b verlässt die erste Filtervorrichtung 4 als schmiermittelreduzierter Gasstrom 3c. Das sich im ersten Speicherbehälter 4b befindliche, abgeschiedene Schmiermittel Sa wird dem ersten Zwischentank 11 zugeführt, und verbleibt dort vorzugsweise zumindest ein paar Stunden, dass das sich im abgeschiedenen Schmiermittel Sa befindliche Prozessgas G im ersten Zwischentank 11 ausgegast wird. Das durch den ersten Zwischentank 11 strömende Spülgas 18 führt das ausgegaste Prozessgas G aus dem ersten Zwischentank 11 ab. Das abgeschiedene Schmiermittel Sa aus dem ersten Zwischentank 11 wird dem Sammeltank 16 zugeführt, sodass das abgeschiedene Schmiermittel Sa im Sammeltank 16 kein Prozessgas G oder eine vernachlässigbar geringe Menge Prozessgas G enthält. Derselbe Vorgang finde auch in der zweiten Filtervorrichtung 5 und dem zugeordneten zweiten Zwischentank 12 statt.

Zwischen der Filtervorrichtung 4, 5 und dem Zwischentank 11, 12 sind zumindest je ein Ventil 7a, 8a angeordnet, dasansteuerbar betätigbar ist. Zwischen der Zwischentanks 11, 12 und dem Sammeltank 16 sind zumindest je ein Ventil 15a, 15b angeordnet, die ansteuerbar betätigbar ist. Die Ventile 7a, 8a, 15a, 15b sind über elektrische Leitungen 41a, 41b, 41c, 41d mit einer Ansteuervorrichtung 40 verbunden. Zwischen einem Ventilpaar ist jeweils der Zwischentank 11, 12 angeordnet, wobei jedes Ventilpaar aus einem dem Zwischentank 11,12 vorgelagerten und einem dem Zwischentank 11,12 nachgelagerten Ventil 7a, 15a; 8a, 15b besteht. Die Ansteuervorrichtung 40 zur Ansteuerung der Ventile 7a, 15a; 8a, 15b ist derart ausgestaltet, dass die Ventile 7a, 15a; 8a, 15b derart angesteuert sind, dass im betriebsgemässen Einsatz bei jedem Ventilpaar zumindest eines der Ventile 7a, 15a; 8a, 15b geschlossen ist, um eine durchgehende, Fluid leitende Verbindung zwischen der erste bzw. zweiten Filtervorrichtung 4,5 und dem Sammeltank 16 auszuschliessen. Dadurch ist sichergestellt, dass der komprimierte Gasstrom 3b, 3c nicht bis in den Zwischentank 11, 12 bzw. den Sammeltank 16 vordringen kann.

Vorteilhafterweise sind die Ventile 7a, 15a, 8a, 15b während des Betriebs der Vorrichtung 1 meistens geschlossen und werden nur während kurzer Zeitdauer geöffnet, so lange es dauert um abgeschiedenes Schmiermittel Sa dem ersten bzw. zweiten Speicherbehälter 4b, 5b zu entnehmen, oder um abgeschiedenes Schmiermittel Sa dem ersten bzw. zweiten Zwischentank 11, 12 zu entnehmen.

Die Vorrichtung 1 umfasst zudem eine Mehrzahl von Füllstandsüberwachungsvorrichtungen 27a, 27b, 27c, 27d, 27e, welche Signal übertragend mit der Ansteuervorrichtung 40 verbunden sind oder welche eine rein optische Füllstandmessung und Füllstandanzeige ermöglichen. Diese Füllstandsüberwachungsvorrichtungen dienen zum Überwachen des Füllstandes des abgeschiedenen Schmiermittels Sa im ersten und zweiten Speicherbehälter 4b, 5b und im ersten und zweiten Zwischentank 11,12 und im Sammeltank 16. Die Ansteuervorrichtung 40 steuert die Ventile 7a, 15a; 8a, 15b in Abhängigkeit von den gemessenen Werten der Füllstandsüberwachungsvorrichtungen 27a, 27b, 27c, 27d, 27e derart an, dass der erste und zweite Speicherbehälter 4b, 5b und der erste und zweite Zwischentank 11,12 und der Sammeltank 16 im betriebsgemässen Einsatz nie vollständig entleert ist, und vorteilhafter immer zumindest einen vorgegebenen Füllstand aufweist, beispielsweise zumindest 25% des maximalen Volumens. Dadurch ist sichergestellt, dass der komprimierte Gasstrom 3b, 3c nicht bis in den Zwischentank 11, 12 bzw. den Sammeltank 16 vordringen kann.

In einer weiteren vorteilhaften Ausgestaltung wird jeder Zwischentank 11, 12 über eine separate Spülgasleitung 17 mit Spülgas 18 versorgt, und weist jeder Zwischentank 11, 12 eine separate Spülgasableitung 17b auf, insbesondere um einen Druckausgleich zwischen dem ersten und zweiten Zwischentank 11, 12 zu vermeiden, sodass jeder der Zwischentanks 11, 12 unabhängig voneinander mit einem unterschiedlichen Druck betreibbar sind.

Figur 1 zeigt zudem eine Anlage umfassend eine explosionsgefährdete Zone 30 mit Aussengrenze 30a sowie eine explosionssichere Zone 31, wobei die vorhin beschriebene Vorrichtung 1 und der Kompressor 2 in der explosionsgefährdeten Zone 30 angeordnet sind, und wobei ein Schmiermitteltank 32 in der explosionssicheren Zone 31 angeordnet ist. Der Sammeltank 16 ist über eine Auslassleitung 21 mit dem Schmiermitteltank 32 verbunden. Die Auslassleitung 21 durchdringt an der Durchtrittsstelle 22 die Umgrenzung 30a der explosionsgefährdeten Zone 30. In der Auslassleitung 21 ist zudem ein Auslassventil 20 angeordnet, das manuell oder angesteuert über eine Steuerleitung 41e geöffnet und geschlossen werden kann, um das Schmiermittel vom Sammeltank 16 in den Schmiermitteltank 32 zu leiten. Vorteilhafterweise wird das Auslassventil 20 nur kurzfristig geöffnet, und zwar so lange bis die angestrebte Menge abgeschiedenes Schmiermittel vom Sammeltank 16 zum Schmiermitteltank 32 abgelassen ist. Das Auslassventil 20 ist ansonsten vorzugsweise geschlossen. Dies erhöht die Sicherheit, dass kein komprimierter Gasstrom 3b bzw. kein brennbares Prozessgas G die explosionsgefährdete Zone 30 verlassen kann. Somit ist sichergestellt, dass das sich im Schmiermitteltank 32 befindliche Schmiermittel frei von brennbarem Prozessgas G ist.

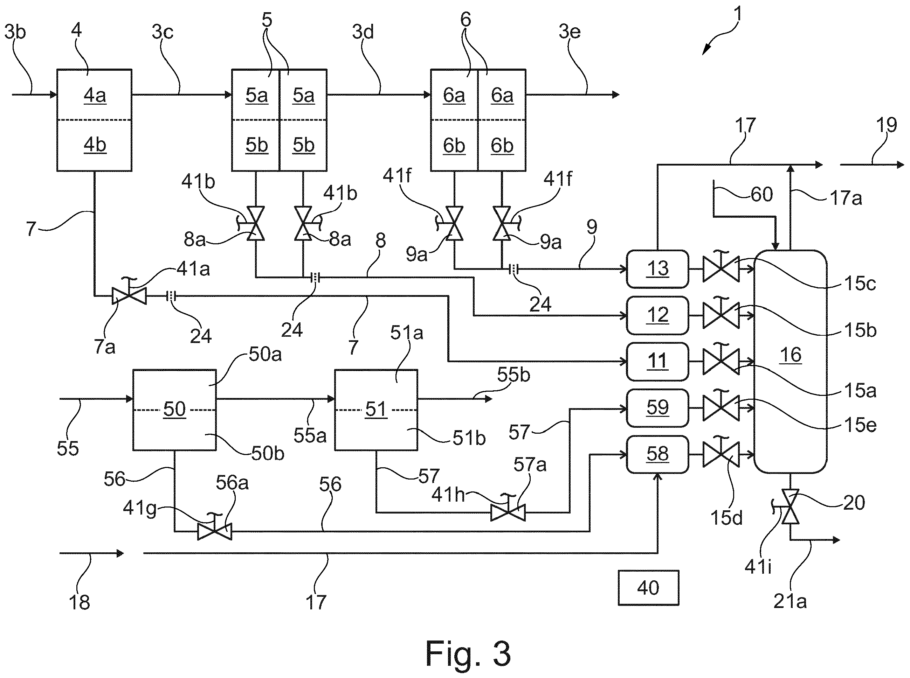

Figur 2 zeigt ein weiteres Ausführungsbeispiel einer Vorrichtung 1 zum Abscheiden von Schmiermitteln S aus einem komprimierten Gasstrom 3b. Im Unterschied zu der in Figur 1 dargestellten Vorrichtung umfasst die Vorrichtung 1 zudem eine dritte Filtervorrichtung 6 sowie einen dritten Zwischentank 13, wobei die dritte Filtervorrichtung 6 über eine Verbindungsleitung 9 und ein ansteuerbares Ventil 9a mit dem dritten Zwischentank 13 verbunden ist. Der dritte Zwischentank 13 ist über eine Verbindungsleitung 14c mit dem Sammeltank 16 verbunden. Die in Figur 2 dargestellte Vorrichtung 1 umfasst somit, im Vergleich zur Vorrichtung 1 gemäss Figur 1, eine zusätzliche Filtervorrichtung 6, durch welche das verdichtete Gas 3b fliesst, bevor das gereinigte Gas 3e erzeugt ist, und umfasst einen zusätzlichen Zwischentank 13 sowie ein zusätzliches Ventil 15c. In den Verbindungsleitungen 7, 8, 9 ist vorteilhafterweise eine Drosselblende 24 zur Druckreduzierung angeordnet, wie in den Figuren 2 und 3 dargestellt. Es ist jedoch auch möglich auf zumindest eine Drosselblende 24 oder auch auf alle Drosselblenden 24 zu verzichten. Die Zwischentanks 11, 12, 13 können wie in Figur 2 dargestellt von einem gemeinsamen Spülgas 18 durchströmt sein. Vorteilhafterweise wird jedem Zwischentank 11, 12, 13 das Spülgas 18 separat zugeführt und auch separat vom Zwischentank 11, 12, 13 abgeführt, damit zwischen den Zwischentanks 11, 12, 13 kein Druckausgleich stattfindet.

Figur 3 zeigt ein weiteres Ausführungsbeispiel einer Vorrichtung 1 zum Abscheiden von Schmiermitteln S aus einem komprimierten Gasstrom 3b. Ein Unterschied zu der in Figur 2 dargestellten Vorrichtung ist, dass die Vorrichtung 1 gemäss Figur 3 zwei Doppelfiltervorrichtungen aufweist, nämlich die zweite und dritte Filtervorrichtung 5,6, welche doppelt und parallel angeordnet ausgeführt sind, und somit je zwei Abscheider 5a, 6a und zwei Speicherbehälter 5b, 6b enthalten, wobei jeder Speicherbehälter 5b, 6b über ein separates Ventil 8a, 9a Fluid leitend mit dem zweiten bzw. dritten Zwischentank 12, 13 verbunden ist. Im Unterschied zu der in Figur 2 dargestellten Vorrichtung umfasst die Vorrichtung 1 gemäss Figur 3 zudem eine vierte und eine fünfte Filtervorrichtung 50, 51, mit Abscheider 50a, 51a und vierten bzw. fünften Speicherbehälter 50b, 51b, wobei der vierten Filtervorrichtung 50 ein Leckgas 55 zugeführt ist, das aus dem Kompressor 2 abgeleitet ist und einen wesentlich tieferen Druck aufweist als das verdichtete Gas 3a, zum Beispiel einen Druck im Bereich von 5 bis 15 Bar. Das Leckgas 55 enthält zumindest brennbares Prozessgas G und Schmiermittel S. Das Leckgas 55 verlässt die vierte Filtervorrichtung 50 als teilweise gereinigtes Leckgas 55a, und verlässt die fünfte Filtervorrichtung 51 als vollständig gereinigtes Leckgas 55b. Der vierte und fünfte Speicherbehälter 50b, 51b ist über je eine Verbindungsleitung 56, 57 mit ansteuerbarem Ventil 56a, 57a mit einem vierten bzw. fünften Zwischentank 58, 59 verbunden. Diese beiden Zwischentanks 58, 59 sind ebenfalls vom Spülgas 18 durchströmt. Die beiden Zwischentanks 58, 59 sind über ansteuerbare Ventile 15d, 15e Fluid leitend mit dem Sammeltank 16 verbunden. Figur 3 zeigt zudem noch einen Schmiermittelauslass 60 des Kompressors 2, der direkt in den Sammeltank 16 geführt ist. Vom Gasraum des Sammeltanks 16 ist eine Auslassleitung 17a abgeführt, welche in den Auslass 19 mündet.

Die in den Figuren 1 bis 3 dargestellten Ausführungsbeispiele weisen eine Vielzahl von Sensoren 27a-27e, Aktuatoren wie Ventile und Steuerleitungen 41a-41i sowie zumindest eine Ansteuervorrichtung 40 auf, wobei diese Elemente der besseren Übersichtlichkeit halber nur teilweise dargestellt sind. So umfassen beispielsweise auch die Ausführungsbeispiele gemäss Figur 2 und 3 beispielsweise Sensoren 27a-27e zur Überwachung des Füllstandes derjenigen Behälter in welchen abgeschiedenes Schmiermittel Sa und allenfalls darin gelöstes Prozessgas gespeichert ist.

## Patentansprüche

1. Vorrichtung (1) zum Abscheiden eines Schmiermittels (S) aus einem komprimierten Gasstrom (3b) enthaltend ein brennbares Prozessgas (G) und das Schmiermittel (S),
- umfassend eine erste Filtervorrichtung (4), welcher der komprimierte Gasstrom (3b) zugeleitet ist, und von welcher ein schmiermittelreduzierter Gasstrom (3c) abgeleitet ist, wobei die erste Filtervorrichtung (4) einen Abscheider (4a) zum Abscheiden von Schmiermittel (S) sowie einen ersten Speicherbehälter (4b) zum Speichern eines abgeschiedenen Schmiermittels (Sa) umfasst, wobei das abgeschiedene Schmiermittel (Sa) eine Restmenge von Prozessgas (G) enthält, sowie
- umfassend einen ersten Zwischentank (11) der über eine erste Verbindungsleitung (7) mit dem ersten Speicherbehälter (4b) verbunden ist,
- umfassend einen Sammeltank (16) der über eine erste Abflussleitung (14a) mit dem ersten Zwischentank (11) verbunden ist, um das abgeschiedene Schmiermittel (Sa) dem Sammeltank (16) zuzuführen;
**dadurch gekennzeichnet, dass**
- eine Spülgaszuleitung (17) dem ersten Zwischentank (11) ein Spülgas (18) zuführt,
- dass eine Spülgasableitung (17b) aus dem ersten Zwischentank (11) Spülgas (18) sowie darin enthaltenes, ausgegastes Prozessgas (G) abführt,
- dass eine zweite Filtervorrichtung (5) angeordnet ist, welcher der schmiermittelreduzierte Gasstrom (3c) zugeleitet ist, und von welcher ein gereinigter Gasstrom (3e) abgeleitet ist, wobei die zweite Filtervorrichtung (5) einen Abscheider (5a) zum Abscheiden von Schmiermittel (S) sowie einen zweiten Speicherbehälter (5b) zum Speichern des abgeschiedenen Schmiermittels (Sa) umfasst, wobei das abgeschiedene Schmiermittel (Sa) eine Restmenge von Prozessgas (G) enthält, sowie
dass ein zweiter Zwischentank (12) angeordnet ist, der über eine zweite Verbindungsleitung (8) mit dem zweiten Speicherbehälter (5b) verbunden ist,
dass eine Spülgaszuleitung (17) dem zweiten Zwischentank (12) ein Spülgas (18) zuführt,
dass eine Spülgasableitung (17b) aus dem zweiten Zwischentank (12) Spülgas (18) sowie darin enthaltenes, ausgegastes Prozessgas (G) abführt,
- dass der Sammeltank (16) über eine zweite Abflussleitung (14b) mit dem zweiten Zwischentank (12) verbunden ist, um das abgeschiedene Schmiermittel (Sa) dem Sammeltank (16) zuzuführen,
dass bezüglich jedem Zwischentank (11, 12) je ein Ventilpaar angeordnet ist, wobei jedes Ventilpaar aus einem dem Zwischentank (11,12) vorgelagerten und einem dem Zwischentank (11,12) nachgelagerten Ventil (7a, 15a; 8a, 15b) besteht,
dass die Vorrichtung zudem eine Ansteuervorrichtung (40) zur Ansteuerung der Ventile (7a, 15a; 8a, 15b) umfasst, wobei die Ventile (7a, 15a; 8a, 15b) derart angesteuert sind, dass im betriebsgemässen Einsatz bei jedem Ventilpaar zumindest eines der Ventile (7a, 15a; 8a, 15b) geschlossen ist, um eine durchgehende, Fluid leitende Verbindung zwischen der erste bzw. zweiten Filtervorrichtung (4,5) und dem Sammeltank (16) auszuschliessen, und
dass eine Mehrzahl von Füllstandsüberwachungsvorrichtungen (27a, 27b, 27c, 27d, 27e) zum Überwachen des Füllstandes des abgeschiedenen Schmiermittels (Sa) im erste und zweiten Speicherbehälter (4b, 5b), im ersten und zweiten Zwischentank (11, 12) sowie im Sammeltank (16) angeordnet sind, wobei die Ansteuervorrichtung (40) die Ventile (7a, 15a, 8a, 15b) in Abhängigkeit der Füllstandsüberwachungsvorrichtungen (27a, 27b, 27c, 27d, 27e) derart ansteuert, dass der erste und zweite Speicherbehälter (4b, 5b), der erste und zweite Zwischentank (11, 12) sowie der Sammeltank (16) im betriebsgemässen Einsatz nie vollständig entleert ist.

2. Vorrichtung nach Anspruch 1, **dadurch gekennzeichnet, dass** die Ventile (7a, 15a; 8a, 15b) derart angesteuert sind, dass nie eine offene, Fluid leitende Verbindung zwischen dem Speicherbehälter (4b, 5b) und dem Sammeltank (16) entsteht.

3. Vorrichtung nach einem der vorhergehenden Ansprüche, **dadurch gekennzeichnet, dass** diese zumindest zwei in Serie geschaltete Filtervorrichtungen umfasst, und dass die erste Filtervorrichtung (4) und die zweite Filtervorrichtung (5) unterschiedliche Ölabscheider aufweisen.

4. Vorrichtung nach Anspruch 3, **dadurch gekennzeichnet, dass** die Filtervorrichtungen als Zyklon-Ölabscheider, und/oder Demister-Ölabscheider und/oder Koaleszenzfilter-Ölabscheider ausgestaltet sind.

5. Vorrichtung nach Anspruch 3 oder 4, **dadurch gekennzeichnet, dass** diese drei in Serie geschaltete Filtervorrichtungen umfasst, einen Zyklon-Ölabscheider und nachfolgend zwei in Serie geschaltete Koaleszenzfilter-Ölabscheider.

6. Anlage umfassend eine Vorrichtung (1) nach einem der Ansprüche 1 bis 5, sowie umfassend einen Kompressor (2), eine explosionsgefährdete Zone (30), eine explosionssichere Zone (31) sowie einen Schmiermitteltank (32), wobei die Vorrichtung (1) und vorzugsweise auch der Kompressor (2) in der explosionsgefährdeten Zone (30) angeordnet ist, wobei der Kompressor (2) ein brennbares Prozessgas (G) unter Verwendung von Schmiermittel (S) zu einem komprimierten Gasstrom (3b) verdichtet, wobei der Schmiermitteltank (32) in der explosionssicheren Zone (31) angeordnet ist, und wobei der Sammeltank (16) über eine Auslassleitung (21) mit dem Schmiermitteltank (32) verbunden ist.

7. Verfahren zum Abscheiden eines Schmiermittels (S) aus einem komprimierten Gasstrom (3b), wobei der Gasstrom (3b) ein brennbares Prozessgas (G) sowie das Schmiermittel (S) umfasst,
- wobei das Schmiermittel (S) mit einer ersten Filtervorrichtung (4) zumindest teilweise aus dem komprimierten Gasstrom (3b) abgeschieden wird und als ein abgeschiedenes Schmiermittel (Sa) enthaltend eine Restmenge von Prozessgas (G) einem ersten Speicherbehälter (4b) zugeführt wird,
- wobei der komprimierte Gasstrom (3b) die erste Filtervorrichtung (4) als schmiermittelreduzierter Gasstrom (3c) verlässt,
- wobei das sich im ersten Speicherbehälter (4b) befindliche, abgeschiedene Schmiermittel (Sa) einem ersten Zwischentank (11) zugeführt wird,
- wobei das sich im abgeschiedenen Schmiermittel (Sa) befindliche Prozessgas (G) im ersten Zwischentank (11) ausgegast wird, **dadurch gekennzeichnet, dass**
- der ersten Zwischentank (11) von einem Spülgas (18) durchström wird und dabei ausgegastes Prozessgas (G) durch das Spülgas (18) aus dem ersten Zwischentank (11) abgeführt wird,
- dass das abgeschiedene Schmiermittel (Sa) aus dem ersten Zwischentank (11) einem Sammeltank (16) zugeführt wird, sodass das abgeschiedene Schmiermittel (Sa) im Sammeltank (16) kein Prozessgas (G) oder eine vernachlässigbar geringe Menge Prozessgas (G) enthält,
- dass der schmiermittelreduzierte Gasstrom (3c) einer zweiten Filtervorrichtung (5) zugeführt wird,
- wobei mit der zweiten Filtervorrichtung (5) Schmiermittel (S) aus dem schmiermittelreduzierte Gasstrom (3c) abgeschieden wird und als ein abgeschiedenes Schmiermittel (Sa) enthaltend eine Restmenge von Prozessgas (G) einem zweiten Speicherbehälter (5b) zugeführt wird,
- wobei der schmiermittelreduzierte Gasstrom (3c) die zweite Filtervorrichtung (4) als gereinigter Gasstrom (3e) verlässt,
- wobei das sich im zweiten Speicherbehälter (5b) befindliche, abgeschiedene Schmiermittel (Sa) einem zweiten Zwischentank (12) zugeführt wird,
- wobei das sich im abgeschiedenen Schmiermittel (Sa) befindliche Prozessgas (G) im zweiten Zwischentank (12) ausgegast wird,
- wobei der zweite Zwischentank (12) ebenfalls vom Spülgas (18) durchströmt wird und dabei ausgegastes Prozessgas (G) durch das Spülgas (18) aus dem zweiten Zwischentank (12) abgeführt wird,
- wobei das abgeschiedene Schmiermittel (Sa) aus dem zweiten Zwischentank (12) dem Sammeltank (16) zugeführt wird;
- wobei jedem Zwischentank (11, 12) paarweise ein vorgelagertes und ein nachgelagertes Ventil (7a, 15a; 8a, 15b) zugeordnet sind,
- wobei das abgeschiedene Schmiermittel (Sa) durch Öffnen und Schliessen des dem Zwischentank (11, 12) vorgelagerten Ventils (7a, 8a) vom Speicherbehälter (4, 5) zum Zwischentank (11, 12) gefördert wird,
- wobei das abgeschiedene Schmiermittel (Sa) durch Öffnen und Schliessen des dem Zwischentank (11, 12) nachgelagerten Ventils (15a, 15b) vom Zwischentank (11, 12) zum Sammeltank (16) gefördert wird,
- wobei die Ventile (7a, 15a; 8a, 15b) derart angesteuert werden, dass bei jedem Zwischentank (11, 12) dessen vorgelagertes und nachgelagertes Ventil (7a, 15a; 8a, 15b) nicht gleichzeitig geöffnet sind, und
dass ein Füllstand des abgeschiedenen Schmiermittels (Sa) im ersten Speicherbehälter (4b) und auch im ersten Zwischentank (11) gemessen wird, dass der Füllstand des abgeschiedenen Schmiermittels (Sa) im zweiten Speicherbehälter (5b) und auch im zweiten Zwischentank (12) gemessen wird, wobei die Ventile (7a, 15a; 8a, 15b) derart angesteuert werden, dass zumindest der erste und zweite Speicherbehälter (4b,5b) nie vollständig entleert werden, und
wobei auch der erste und der zweite Zwischentank (11, 12) nie vollständig entleert werden.

8. Verfahren nach Anspruch 7, **dadurch gekennzeichnet, dass** das abgeschiedene Schmiermittel (Sa) während einer Zeitdauer von zumindest einer Stunde, und vorzugsweise während einer Zeitdauer im Bereich von mehreren Stunden bis zehn Tagen im Zwischentank (11, 12) belassen wird, bevor dies dem Sammeltank (16) zugeführt wird.

9. Verfahren nach einem der Ansprüche 7 oder 8, **dadurch gekennzeichnet, dass** das abgeschiedene Schmiermittel (Sa) zumindest zwei Wochen und vorzugsweise zumindest 4 Wochen im Sammeltank (16) belassen wird, bevor das abgeschiedene Schmiermittel (Sa) einem nachfolgenden Schmiermitteltank (32) zugeleitet wird.

10. Verfahren nach einem der Ansprüche 7 bis 9, **dadurch gekennzeichnet, dass** dieses in einer explosionsgefährdeten Zone (30) durchgeführt wird, und dass das abgeschiedene Schmiermittel (Sa) nach dem Sammeltank (16) in eine explosionssichere Zone (31) gefördert wird und dort in einem Schmiermitteltank (32) gespeichert wird.

11. Verfahren zum Verdichten eines brennbaren Prozessgases (G) mit einem Kolbenkompressor (2), indem das Prozessgas (G) einem Verdichtungsraum des Kolbenkompressors (2) zugeführt wird, indem ein Schmiermittel (S) dem Verdichtungsraum zugeführt wird, und indem das Prozessgas (G) sowie das Schmiermittel (S) zu einem komprimierten Gasstrom (3b) enthaltend Prozessgas (G) und Schmiermittel (S) verdichtet werden, und indem das Schmiermittel (S) gemäss einem Verfahren der Ansprüche 7 bis 10 aus dem komprimierten Gasstrom (3b) abgeschieden wird.

12. Verfahren nach Anspruch 11, **dadurch gekennzeichnet, dass** der komprimierte Gasstrom (3b) auf einen Druck von zumindest 80 bar verdichtet wird.

13. Verfahren nach Anspruch 11 oder 12, **dadurch gekennzeichnet, dass** das Prozessgas (G) aus Erdgas oder Methan oder Ethan besteht.

## Claims

1. A device (1) for separating a lubricant (S) from a compressed gas stream (3b) containing a combustible process gas (G) and the lubricant (S),
- comprising a first filter device (4) to which the compressed gas stream (3b) is supplied and from which a lubricant-reduced gas stream (3c) is derived, the first filter device (4) comprising a separator (4a) for separating lubricant (S) and a first storage tank (4b) for storing a separated lubricant (Sa), the separated lubricant (Sa) containing a residual amount of process gas (G), and
- comprising a first intermediate tank (11) which is connected to the first storage tank (4b) via a first connecting line (7),
- comprising a collection tank (16) connected to the first intermediate tank (11) via a first discharge line (14a) for supplying the separated lubricant (Sa) to the collection tank (16);
**characterized in that**
- a purge gas supply line (17) supplies a purge gas (18) to the first intermediate tank (11),
- **in that** a purge gas discharge line (17b) discharges purge gas (18) and degassed process gas (G) contained therein from the first intermediate tank (11),
- that a second filter device (5) is arranged to which the lubricant-reduced gas stream (3c) is fed and from which a purified gas stream (3e) is discharged, the second filter device (5) comprising a separator (5a) for separating lubricant (S) and a second storage tank (5b) for storing the separated lubricant (Sa), the separated lubricant (Sa) containing a residual amount of process gas (G), and
**in that** a second intermediate tank (12) is arranged, which is connected to the second storage tank (5b) via a second connecting line (8),
**in that** a purge gas supply line (17) supplies a purge gas (18) to the second intermediate tank (12),
**in that** a purge gas discharge line (17b) discharges purge gas (18) and degassed process gas (G) contained therein from the second intermediate tank (12),
- that the collection tank (16) is connected via a second discharge line (14b) to the second intermediate tank (12) in order to supply the separated lubricant (Sa) to the collecting tank (16),
**in that** a valve pair is arranged with respect to each intermediate tank (11, 12), each valve pair consisting of a valve (7a, 8a) located upstream of the intermediate tank (11, 12) and a valve (15a, 15b) located downstream of the intermediate tank (11, 12),
that the device further comprises a control device (40) for controlling the valves (7a, 15a; 8a, 15b),
wherein the valves (7a, 15a; 8a, 15b) are controlled in such a way that, in operational use, at least one of the valves (7a, 15a; 8a, 15b) is closed for each pair of valves in order to exclude a continuous, fluid-conducting connection between the first or second filter device (4, 5) and the collecting tank (16), and
that a plurality of level monitoring devices (27a, 27b, 27c, 27d, 27e) for monitoring the level of the separated lubricant (Sa) are arranged in the first and second storage tank (4b, 5b), in the first and second intermediate tank (11, 12) as well as in the collecting tank (16), wherein the control device (40) controls the valves (7a, 15a, 8a, 15b) as a function of the level monitoring devices (27a, 27b, 27c, 27d, 27e) in such a way that the first and second storage tanks (4b, 5b), the first and second intermediate tanks (11, 12) and the collecting tank (16) are never completely emptied in operational use.

2. The device according to claim 1, **characterized in that** the valves (7a, 15a; 8a, 15b) are controlled in such a way that there is never an open, fluid-conducting connection between the storage tank (4b, 5b) and the collecting tank (16) .

3. The device according to any one of the preceding claims, **characterized in that** it comprises at least two filter devices connected in series, and **in that** the first filter device (4) and the second filter device (5) have different oil separators.

4. The device according to claim 3, **characterized in that** the filter devices are designed as cyclone oil separators, and/or demister oil separators and/or coalescence filter oil separators.

5. The device according to claim 3 or 4, **characterized in that** it comprises three filter devices connected in series, a cyclone oil separator and subsequently two coalescence filter oil separators connected in series.

6. An installation comprising a device (1) according to any one of claims 1 to 5, and comprising a compressor (2), a potentially explosive zone (30), an explosion-proof zone (31), and a lubricant tank (32), wherein the device (1) and preferably also the compressor (2) is arranged in the potentially explosive zone (30), wherein the compressor (2) compresses a combustible process gas (G) using lubricant (S) into a compressed gas stream (3b), wherein the lubricant tank (32) is arranged in the explosion-proof zone (31), and wherein the collecting tank (16) is connected to the lubricant tank (32) via an outlet line (21).

7. A method of separating a lubricant (S) from a compressed gas stream (3b), wherein the gas stream (3b) comprises a combustible process gas (G) and the lubricant (S),
- wherein the lubricant (S) is at least partially separated from the compressed gas stream (3b) by a first filter device (4) and is supplied as a separated lubricant (Sa) containing a residual amount of process gas (G) to a first storage tank (4b),
- the compressed gas stream (3b) leaving the first filter device (4) as a lubricant-reduced gas stream (3c),
- wherein the separated lubricant (Sa) located in the first storage tank (4b) is supplied to a first intermediate tank (11),
- wherein the process gas (G) present in the separated lubricant (Sa) is outgassed in the first intermediate tank (11), **characterized in that**
- the first intermediate tank (11) is passed through by a purge gas (18), and degassed process gas (G) is discharged from the first intermediate tank (11) by the purge gas (18),
- **in that** the separated lubricant (Sa) from the first intermediate tank (11) is fed to a collecting tank (16), so that the separated lubricant (Sa) in the collecting tank (16) contains no process gas (G) or a negligible amount of process gas (G),
- **in that** the lubricant-reduced gas stream (3c) is fed to a second filter device (5),
- wherein lubricant (S) is separated from the lubricant-reduced gas stream (3c) by the second filter device (5) and is supplied as a separated lubricant (Sa) containing a residual amount of process gas (G) to a second storage tank (5b),
- the lubricant-reduced gas stream (3c) leaving the second filter device (4) as a purified gas stream (3e),
- wherein the separated lubricant (Sa) located in the second storage tank (5b) is supplied to a second intermediate tank (12),
- wherein the process gas (G) present in the deposited lubricant (Sa) is outgassed in the second intermediate tank (12),
- wherein the second intermediate tank (12) is also passed through by the purge gas (18), thereby removing outgassed process gas (G) from the second intermediate tank (12),
- wherein the separated lubricant (Sa) from the second intermediate tank (12) is supplied to the collecting tank (16),
- each intermediate tank (11, 12) being assigned in pairs an upstream and a downstream valve (7a, 15a; 8a, 15b),
- wherein the separated lubricant (Sa) is conveyed from the storage tank (4, 5) to the intermediate tank (11, 12) by opening and closing the valve (7a, 8a) upstream of the intermediate tank (11, 12),
- wherein the separated lubricant (Sa) is transferred from the intermediate tank (11, 12) to the collecting tank by opening and closing the valve (15a, 15b) located downstream of the intermediate tank (11, 12),
- wherein the valves (7a, 15a; 8a, 15b) are controlled in such a way that, for each intermediate tank (11, 12), its upstream and downstream valves (7a, 15a; 8a, 15b) are not open simultaneously, and
**in that** a filling level of the separated lubricant (Sa) is measured in the first storage tank (4b) and also in the first intermediate tank (11), **in that** the filling level of the separated lubricant (Sa) is measured in the second storage tank (5b) and also in the second intermediate tank (12), the valves (7a, 15a; 8a, 15b) being actuated in such a way that at least the first and second storage tanks (4b, 5b) are never completely emptied, and
that the first and second intermediate tanks (11, 12) are also never completely emptied.

8. The method according to claim 7, **characterized in that** the separated lubricant (Sa) is left in the intermediate tank (11, 12) for a period of at least one hour, and preferably for a period in the range of several hours to ten days, before it is supplied to the collecting tank (16).

9. The method according to any one of claims 7 or 8, **characterized in that** the separated lubricant (Sa) is left in the collection tank (16) for at least two weeks and preferably at least 4 weeks before the separated lubricant (Sa) is supplied to a subsequent lubricant tank (32).

10. The method according to any one of claims 7 to 9, **characterized in that** it is carried out in a potentially explosive zone (30), and **in that** the separated lubricant (Sa) is conveyed downstream of the collecting tank (16) into an explosion-proof zone (31) and is stored there in a lubricant tank (32).

11. A method for compressing a combustible process gas (G) with a piston compressor (2), wherein the process gas (G) is supplied to a compression chamber of the piston compressor (2), wherein a lubricant (S) is supplied to the compression chamber and wherein the process gas (G) and the lubricant (S) are compressed to a compressed gas stream (3b) containing process gas (G) and lubricant (S), and wherein the lubricant (S) is separated from the compressed gas stream (3b) according to a method of claims 7 to 10.

12. The method according to claim 11, **characterized in that** the compressed gas stream (3b) is compressed to a pressure of at least 80 bar.

13. The method according to claim 11 or 12, **characterized in that** the process gas (G) consists of natural gas or methane or ethane.

## Revendications

1. Dispositif (1) pour séparer un lubrifiant (S) d'un courant de gaz comprimé (3b) contenant un combustible gaz de procédé (G) et le lubrifiant (S),
- comprenant un premier dispositif de filtration (4) auquel est amené le courant de gaz comprimé (3b) et duquel est dérivé un courant de gaz à teneur réduite en lubrifiant (3c), le premier dispositif de filtration (4) comprenant un séparateur (4a) pour séparer le lubrifiant (S) et un premier réservoir de stockage (4b) pour stocker un lubrifiant séparé (Sa), le lubrifiant séparé (Sa) contenant une quantité résiduelle de gaz de procédé (G), et
- comprenant un premier réservoir intermédiaire (11) qui est relié au premier réservoir de stockage (4b) par une première conduit de liaison (7),
- comprenant un réservoir de collecte (16) qui est relié au premier réservoir intermédiaire (11) par une première conduit d'évacuation (14a) afin d'amener le lubrifiant séparé (Sa) au réservoir de collecte (16);
**caractérisé en ce que**
- une conduite d'alimentation de gaz de purge (17) amène un gaz de purge (18) au premier réservoir intermédiaire (11),
- **en ce qu'**une conduite d'évacuation de gaz de purge (17b) évacue du premier réservoir intermédiaire (11) le gaz de purge (18) ainsi que le gaz de procédé (G) dégazé qui y est contenu,
- **en ce qu'**un deuxième dispositif de filtration (5) est disposé, auquel est amené le courant de gaz (3c) à teneur réduit en lubrifiant, et duquel est dérivé un courant de gaz (3e) purifié, le deuxième dispositif de filtration (5) comprenant un séparateur (5a) pour séparer le lubrifiant (S) ainsi qu'un deuxième réservoir de stockage (5b) pour stocker le lubrifiant séparé (Sa), le lubrifiant séparé (Sa) contenant une quantité résiduelle de gaz de procédé (G), et
**en ce que** un deuxième réservoir intermédiaire (12) est disposé, lequel est relié au deuxième réservoir de stockage (5b) par une deuxième conduit de liaison (8),
**en ce qu'**une conduite d'alimentation de gaz de purge (17) fournit un gaz de purge (18) au deuxième réservoir intermédiaire (12),
**en ce qu'**une conduite d'évacuation de gaz de purge (17b) évacue du deuxième réservoir intermédiaire (12) le gaz de purge (18) ainsi que le gaz de procédé (G) dégazé qui y est contenu,
- que le réservoir de collecte (16) est relié au deuxième réservoir intermédiaire (12) par une deuxième conduite d'évacuation afin d'amener le lubrifiant séparé (Sa) au réservoir de collecte (16),
**en ce qu'**une paire de vannes est disposée par rapport à chaque réservoir intermédiaire (11, 12), chaque paire de vannes étant constituée d'une vanne (7a, 8a) située en amont du réservoir intermédiaire (11, 12) et d'une vanne (15a, 15b) située en aval du réservoir intermédiaire (11, 12),
que le dispositif comprend en outre un dispositif de commande (40) pour la commande des vannes (7a, 15a ; 8a, 15b), dans lequel les vannes (7a, 15a ; 8a, 15b) sont commandées de telle sorte que, dans le cas d'une utilisation conforme au fonctionnement, au moins l'une des vannes (7a, 15a ; 8a, 15b) est fermée pour chaque paire de vannes, afin d'exclure une liaison continue conduisant le fluide entre le premier ou le deuxième dispositif de filtration (4, 5) et le réservoir de collecte (16), et
**en ce qu'**une pluralité de dispositifs de surveillance du niveau de remplissage (27a, 27b, 27c, 27d, 27e) sont disposés dans le premier et le deuxième réservoir de stockage (4b, 5b), dans le premier et le deuxième réservoir intermédiaire (11, 12) ainsi que dans le réservoir de collecte (16) pour surveiller le niveau de remplissage du lubrifiant séparé (Sa), dans lequel le dispositif de commande (40) actionnant les vannes (7a, 15a, 8a, 15b) en fonction des dispositifs de surveillance du niveau de remplissage (27a, 27b, 27c, 27d, 27e) de telle sorte que le premier et le deuxième réservoir de stockage (4b, 5b), le premier et le deuxième réservoir intermédiaire (11, 12) ainsi que le réservoir de collecte (16) ne soient jamais complètement vidés lors de l'utilisation conforme au fonctionnement.

2. Dispositif selon la revendication 1, **caractérisé en ce que** les vannes (7a, 15a ; 8a, 15b) sont commandées de telle sorte qu'il n'y ait jamais de connexion ouverte, conductrice de fluide, entre le réservoir de stockage (4b, 5b) et le réservoir de collecte (16).

3. Dispositif selon l'une quelconque des revendications précédentes, **caractérisé en ce qu'**il comprend au moins deux dispositifs de filtration montés en série, et **en ce que** le premier dispositif de filtration (4) et le deuxième dispositif de filtration (5) comportent des séparateurs d'huile différents.

4. Dispositif selon la revendication 3, **caractérisé en ce que** les dispositifs de filtration sont conçus comme des séparateurs d'huile à cyclone, et/ou des séparateurs d'huile à filtre dévsiculeur et/ou des séparateurs d'huile à filtre coalescent.

5. Dispositif selon la revendication 3 ou 4, **caractérisé en ce qu'**il comprend trois dispositifs de filtration en série, un séparateur d'huile à cyclone suivi de deux séparateurs d'huile à filtre coalescent en série.

6. Installation comprenant un dispositif (1) selon l'une des revendications 1 à 5, comprenant en outre un compresseur (2), une zone à risque d'explosion (30), une zone antidéflagrante (31) ainsi qu'un réservoir de lubrifiant (32), le dispositif (1) et de préférence également le compresseur (2) étant disposés dans la zone à risque d'explosion (30), le compresseur (2) comprimant un gaz de procédé combustible (G) en utilisant du lubrifiant (S) pour former un courant de gaz comprimé (3b), le réservoir de lubrifiant (32) étant disposé dans la zone antidéflagrante (31), et le réservoir de collecte (16) étant relié au réservoir de lubrifiant (32) par une conduite de sortie (21).

7. Procédé de séparation d'un lubrifiant (S) à partir d'un courant de gaz comprimé (3b), dans lequel le courant de gaz (3b) comprend un gaz de procédé combustible (G) ainsi que le lubrifiant (S),
- le lubrifiant (S) étant séparé au moins partiellement du courant de gaz comprimé (3b) à l'aide d'un premier dispositif de filtration (4) et étant amené à un premier réservoir de stockage (4b) en tant que lubrifiant séparé (Sa) contenant une quantité résiduelle de gaz de procédé (G),
- dans lequel le courant de gaz comprimé (3b) quitte le premier dispositif de filtration (4) sous forme de courant de gaz à teneur réduite en lubrifiant (3c),
- le lubrifiant (Sa) séparé se trouvant dans le premier réservoir de stockage (4b) étant acheminé vers un premier réservoir intermédiaire (11),
- le gaz de processus (G) se trouvant dans le lubrifiant séparé (Sa) étant dégazé dans le premier réservoir intermédiaire (11), **caractérisé en ce que**
- le premier réservoir intermédiaire (11) est traversé par un gaz de purge (18) et le gaz de procédé (G) dégazé est alors évacué du premier réservoir intermédiaire (11) par le gaz de purge (18),
- **en ce que** le lubrifiant séparé (Sa) est amené à partir du premier réservoir intermédiaire (11) à un réservoir de collecte (16), de sorte que le lubrifiant séparé (Sa) dans le réservoir de collecte (16) ne contient pas de gaz de procédé (G) ou contient une quantité négligeable de gaz de procédé (G),
- **en ce que** le courant de gaz (3c) à teneur réduite en lubrifiant est amené à un deuxième dispositif de filtration (5),
- dans lequel, avec le deuxième dispositif de filtration (5), du lubrifiant (S) est séparé du courant de gaz (3c) à teneur réduite en lubrifiant et est amené à un deuxième réservoir de stockage (5b) en tant que lubrifiant séparé (Sa) contenant une quantité résiduelle de gaz de procédé (G),
- dans lequel le courant de gaz à teneur réduite en lubrifiant (3c) quitte le deuxième dispositif de filtration (4) sous forme de courant de gaz purifié (3e),
- le lubrifiant (Sa) séparé se trouvant dans le deuxième réservoir de stockage (5b) étant acheminé vers un deuxième réservoir intermédiaire (12),
- le gaz de procédé (G) se trouvant dans le lubrifiant déposé (Sa) étant dégazé dans le deuxième réservoir intermédiaire (12),
- le deuxième réservoir intermédiaire (12) étant également traversé par le gaz de purge (18) et le gaz de procédé dégazé (G) étant alors évacué du deuxième réservoir intermédiaire par le gaz de purge (18),
- dans lequel le lubrifiant séparé (Sa) est amené du deuxième réservoir intermédiaire (12) au réservoir de collecte (16) ;
- une vanne amont et une vanne aval (7a, 15a ; 8a, 15b) étant associées par paires à chaque réservoir intermédiaire (11, 12),
- le lubrifiant séparé (Sa) étant transporté du réservoir de stockage (4, 5) au réservoir intermédiaire (11, 12) par l'ouverture et la fermeture de la vanne (7a, 8a) située en amont du réservoir intermédiaire (11, 12),
- le lubrifiant séparé (Sa) étant transféré du réservoir intermédiaire (11, 12) au réservoir de collecte par l'ouverture et la fermeture de la vanne (15a, 15b) située en aval du réservoir intermédiaire (11, 12),
- les vannes (7a, 15a ; 8a, 15b) étant commandées de telle sorte que, pour chaque réservoir intermédiaire (11, 12), sa vanne amont et sa vanne aval (7a, 15a ; 8a, 15b) ne soient pas ouvertes simultanément, et
**en ce qu'**un niveau de remplissage du lubrifiant séparé (Sa) est mesuré dans le premier réservoir de stockage (4b) et également dans le premier réservoir intermédiaire (11), **en ce que** le niveau de remplissage du lubrifiant séparé (Sa) est mesuré dans le deuxième réservoir de stockage (5b) et également dans le deuxième réservoir intermédiaire (12), les vannes (7a, 15a ; 8a, 15b) étant commandées de telle sorte qu'au moins le premier et le deuxième réservoir de stockage (4b, 5b) ne sont jamais complètement vidés, et
le premier et le deuxième réservoir intermédiaire (11, 12) ne sont jamais complètement vidés non plus.

8. Procédé selon la revendication 7, **caractérisé en ce que** le lubrifiant séparé (Sa) est laissé dans le réservoir intermédiaire (11, 12) pendant une durée d'au moins une heure, et de préférence pendant une durée de l'ordre de plusieurs heures à dix jours, avant d'être envoyé dans le réservoir de collecte (16).

9. Procédé selon l'une des revendications 7 ou 8, **caractérisé en ce que** le lubrifiant séparé (Sa) est laissé dans le réservoir de collecte (16) pendant au moins deux semaines, et de préférence pendant au moins 4 semaines, avant que le lubrifiant séparé (Sa) ne soit envoyé vers un réservoir de lubrifiant (32) suivant.

10. Procédé selon l'une quelconque des revendications 7 à 9, **caractérisé en ce qu'**il est mis en œuvre dans une zone (30) à risque d'explosion et **en ce que** le lubrifiant (Sa) séparé est transporté en aval du réservoir de collecte (16) dans une zone (31) antidéflagrante où il est stocké dans un réservoir de lubrifiant (32).

11. Procédé de compression d'un gaz de procédé combustible (G) avec un compresseur à piston (2), dans lequel le gaz de procédé (G) est amené à une chambre de compression du compresseur à piston (2), dans lequel un lubrifiant (S) est amené à la chambre de compression, et en ce que le gaz de procédé (G) ainsi que le lubrifiant (S) sont comprimés en un courant de gaz comprimé (3b) contenant le gaz de procédé (G) et le lubrifiant (S), et en ce que le lubrifiant (S) est séparé du courant de gaz comprimé (3b) selon un procédé des revendications 7 à 10.

12. Procédé selon la revendication 11, **caractérisé en ce que** le courant de gaz comprimé (3b) est comprimé à une pression d'au moins 80 bars.

13. Procédé selon la revendication 11 ou 12, **caractérisé en ce que** le gaz de procédé (G) est constitué de gaz naturel ou de méthane ou d'éthane.
